# EUROPEAN PATENT SPECIFICATION

(11) **EP 2 340 283 B1**
(45) Date of publication and mention of the grant of the patent: **14.11.2018**
(21) Application number: 09792992.1
(22) Date of filing: 25.09.2009
(51) Int. Cl.: C08L 53/00, C09D 153/00, C08F 293/00

(54) **BLOCK COPOLYMER PIGMENT DISPERSANTS**
PIGMENTDISPERSIONSMITTEL AUF BASIS VON BLOCKCOPOLYMEREN
DISPERSANTS DU TYPE COPOLYMÈRE À BLOCS, POUR UN COLORANT

(30) Priority: 25.09.2008 US 100028 P; 25.09.2008 US 100049 P; 25.09.2008 US 100085 P; 25.09.2008 US 100058 P; 25.09.2008 US 100072 P; 25.09.2008 US 100037 P
(43) Date of publication of application: 06.07.2011
(73) Proprietor: Coatings Foreign IP Co. LLC, Wilmington, DE 19801 (US)
(72) Inventor: MA, Sheau-Hwa, West Chester, Pennsylvania 18382 (US)
(74) Representative: LKGLOBAL Lorenz & Kopf PartG mbB Patentanwälte
(86) International application number: PCT/US2009/058335
(87) International publication number: WO 2010/036867

(56) References cited:
- EP-A1- 0 556 650
- CN-A- 1 223 276
- US-A- 5 085 698
- US-A- 5 859 113
- US-A1- 2008 194 758
- US-A1- 20050 197 441
- US-B1- 6 316 564
- US-B1- 6 362 274

## Description

### FIELD OF INVENTION

This invention relates to polymeric pigment dispersants, and more particularly, relates to block copolymer pigment dispersants having an acetoacetyl amine pigment anchoring group. These dispersants can be useful in dispersing a wide variety of pigments.

### BACKGROUND OF INVENTION

Polymeric pigment dispersants which are effective for dispersing pigments in organic liquids are known in the art and are used to form pigment dispersions that are used in a variety of solvent borne coating compositions. Nowadays, such pigment dispersions are widely used, for example, in exterior solvent borne paints for automobiles and trucks.

Much of the past activity with polymeric dispersants has been with random copolymers, but these relatively inefficient materials are being replaced by structured polymeric pigment dispersants having block copolymer or graft structures.

Block copolymer dispersants that have been used in the past are described in, for example, U.S. Patent No. 5,859,113, U. S. Patent No. 6,316,564 and EP Patent No. 0 556 650. Such block copolymers include one block providing steric stability and another block having a pigment anchoring group which is designed to adsorb on the surface of a pigment particle and so attach the copolymer dispersant to the pigment surface.
US Patent No. 6,362,274 discloses pigment dispersions comprising sequenced copolymers which may comprise oxyacetate groups.

Many of the modern pigments are chemically or physically treated to incorporate functional groups on their surfaces to enhance their performance. This presents the possibility for enhancing the binding force of a polymeric dispersant to the pigment surfaces, since these functional groups can then become potential sites for anchoring the dispersant polymers onto their surfaces for improved dispersion stability and rheology. The commonly used surface treating agents are pigment derivatives having acidic groups such as sulfonates and carboxylates. Naturally, a dispersant polymer with basic groups will be able to have a stronger binding force through the acid-base interaction with these acidic groups and become more effective.

With broad variety of solvent systems and pigments, new polymeric pigment dispersants with different pigment anchoring groups and good compatibility with different solvents are still needed.

### STATEMENT OF INVENTION

This invention is directed to a pigment dispersant comprising a linear block copolymer, said linear block copolymer comprising:
(a) a linear A-block formed by polymerizing ethylenically unsaturated A-block monomers; and
(b) a linear B-block comprising one or more acetoacetyl amine functional groups as pigment anchoring groups, said linear B-block is formed by polymerizing ethylenically unsaturated B-block monomers;
wherein said linear A-block is essentially free from said acetoacetyl amine functional groups.

This invention is further directed to a pigment dispersant comprising a linear triblock copolymer, said linear triblock copolymer comprising:
(a) a linear A-block formed by polymerizing ethylenically unsaturated A-block monomers; and
(b) a linear B-block comprising one or more acetoacetyl amine functional groups as pigment anchoring groups, said linear B-block is formed by polymerizing ethylenically unsaturated B-block monomers;
(c) a linear C-block formed by polymerizing ethylenically unsaturated C-block monomers;
wherein said linear A-block and said C-block are essentially free from said acetoacetyl amine functional groups, and wherein said A-block monomers and said C-block monomers are the same or different.

### DETAILED DESCRIPTION OF INVENTION

The features and advantages of the present invention will be more readily understood, by those of ordinary skill in the art, from reading the following detailed description. It is to be appreciated that certain features of the invention, which are, for clarity, described above and below in the context of separate embodiments, may also be provided in combination in a single embodiment. Conversely, various features of the invention that are, for brevity, described in the context of a single embodiment, may also be provided separately or in any subcombination. In addition, references in the singular may also include the plural (for example, "a" and "an" may refer to one, or one or more) unless the context specifically states otherwise.

The use of numerical values in the various ranges is intended as a continuous range including every value between the minimum and maximum values.

As used herein:
The term "pigment dispersant" or "polymeric pigment dispersant" means a polymer that is used to disperse pigments. A polymeric pigment dispersant typically comprises one or more pigment anchoring groups which is designed to adsorb on the surface of a pigment particle and so attach the polymeric pigment dispersant to the pigment surface.

A "pigment dispersion" means a composition comprising dispersed pigments and at least one pigment dispersant. A pigment dispersion can comprise one or more solvents, resins and other additives or components.

The term "Mw" means weight average molecular weight.

The term "Mn" means number average molecular weight.

The polymeric pigment dispersant of this invention can be a linear block copolymer and can have an AB, ABA, or ABC polymeric structure comprising an A-block, a B-block, and optionally a C-block. As is conventional in the art, each letter is used to reference a polymeric block, a different letter indicates a block having a different monomer composition and the same letter is used for blocks having the same monomer composition. For example, AB-diblock copolymers are diblock copolymers wherein the two blocks, namely A-block and B-block, are different. ABA-triblock copolymers can comprise three blocks, but only two different blocks (i.e. the two A-blocks are polymerized from the same monomer composition). ABC-triblock copolymers also comprise three blocks, but all blocks are having monomer compositions different from each other. Each individual polymeric block can also be referred to as an A-block, a B-block or a C-block, respectively.

In this invention, the A-block can be typically soluble in the solvent or solvents mix used to make pigment dispersions, and is compatible with other ingredients such as a binder of a coating composition. The A-block is essentially free from any pigment anchoring groups. The B-block of the linear block copolymers can typically comprise pigment anchoring groups that are relatively more polar and capable of binding with pigments. A third block, the C-block can be optional and can be used to fine tune the balance of solubility of the block copolymer for a specific coating system. The C-block can have the same monomer composition as the A-block resulting in an ABA-triblock copolymer, or a different monomer composition from the A and B monomers resulting in an ABC-triblock copolymer having three different blocks.

The size of each block can vary depending on the final properties desired. However, each block should be substantially linear and contain on average at least 3 units of monomers. In one embodiment, the number of monomers within a single block is 10 or more. Weight average molecular weight of each block can be in a range of from 1,000 to 50,000. In one embodiment, the weight average molecular weight of each block can be in a range of from 1,500 to 50,000. In another embodiment, the weight average molecular weight of each block can be in a range of from 1,500 to 40,000. The linear block copolymer of this invention can have weight average molecular weight in a range of from 2,000 to 100,000. In one embodiment, the linear block copolymer can have weight average molecular weight in a range of from 3,000 to 100,000.

The block copolymers of the present invention can be prepared by living polymerization methods such as anionic polymerization, group transfer polymerization (GTP), nitroxide-mediated free radical polymerization, atom transfer radical polymerization (ATRP), or reversible addition-fragmentation chain transfer (RAFT) polymerization.

Most of the living polymerization approaches mentioned above, such as GTP polymerization, require special and costly raw materials including special initiating systems and high purity monomers. Some of them have to be carried out under extreme conditions such as low moisture or low temperature. Furthermore, some of these methods are sensitive to the active hydrogen groups on the monomers such as the hydroxyl and carboxylic acid groups. These groups would have to be chemically protected during the polymerization and recovered in a subsequent step. In addition, some of the initiating systems bring undesirable color, odor, metal complexes, or potentially corrosive halides into the product. Extra steps would be required to remove them.

The block copolymers of the present invention can also be prepared by free racial polymerization in the presence of a catalytic chain transfer, also known as "macromonomer" approach. The free radical polymerization is preferred.

In free radical polymerization, the block copolymers are conveniently prepared by a multi-step free radical polymerization process. Examples of such a free radical polymerization process is disclosed in U.S. Pat. No. 6,291,620 to Moad et al. In such process, extremely low concentration of catalyst can be used resulting minimum impact on the quality of final products, and the synthesis can be conveniently accomplished in a one-pot process.

To produce the block copolymer of this invention, A-block can be formed by polymerizing ethylenically unsaturated monomers or monomer mixtures, herein referred to as A-block monomers, chosen for this block, using a polymerization process such as anionic polymerization, group transfer polymerization (GTP), nitroxide-mediated free radical polymerization, atom transfer radical polymerization (ATRP), reversible addition-fragmentation chain transfer (RAFT) polymerization, or free radical polymerization in the presence of a catalytic chain transfer. In one example, the A-block can be formed by polymerizing the A-block monomers using the free radical polymerization in the presence of a catalytic chain transfer such as cobalt catalytic chain transfer agents or other transfer agents that are capable of terminating the free radical polymer chain and forming a "macromonomer" with a terminal polymerizable double bond. The polymerization can be carried out at elevated temperature in an organic solvent or solvent blend using a conventional free radical initiator and Cobalt (II) or Cobalt (III) chain transfer agent.

Once the A-block reaches a desired molecular weight and monomer conversion reaches a desired level, the cobalt chain transfer agent can be deactivated by adding a small amount of oxidizing agent such as hydroperoxide. Conversions can be determined by size exclusion chromatography (SEC) via integration of polymers to monomer peak. The unsaturated monomers or monomer mixtures, herein referred to as B-block monomers, chosen for the next block (B-block) can then be polymerized in the presence of the A-block and more initiator. This step, which can be referred to as a macromonomer step-growth process, can also be carried out at elevated temperature in an organic solvent or solvent blend using a conventional polymerization initiator. Polymerization can be continued until an AB-diblock copolymer is formed and reaches desired molecular weight.

If desired, monomers for a third block can then be added. The monomers for the third block can have the same monomer composition as the A-block monomers resulting in a triblock copolymer having ABA block structure. The monomers for the third block can also have monomer composition different from the A-block and B-block monomers resulting in an ABC-triblock copolymer. The steps for the preparation of these block copolymers can be easily reversed by starting from the other end of the block copolymers, e.g. the B-block of the AB-diblock copolymer, or the C block of the ABC-block copolymer, by using the same preparation methods described above. In one example, the B-block can be first polymerized from the B-block monomers in the presence of an aforementioned suitable chain transfer agent, and then adding monomers selected for the A-block (A-block monomers) to form an AB-diblock copolymer. In another example, the C-block can be first formed by polymerizing the monomers selected for the C-block (C-block monomers) in the presence of an aforementioned suitable chain transfer agent, and then adding monomers selected for the B-block (B-block monomers), and then adding selected monomers for the A-block (A-block monomers), to form an ABC-triblock copolymer.

Suitable cobalt chain transfer agents are described in U.S. Pat. Nos. 4,680,352 to Janowicz et al and 4,722,984 to Janowicz. Examples of suitable cobalt chain transfer agents can include pentacyano cobaltate (II), diaquabis (borondiflurodimethylglyoximato) cobaltate (II), diaquabis (borondifluorophenylglyoximato) cobaltate (II), and isopropyl bis(borondifluorodimethylglyoximato) cobaltate (III). Typically these chain transfer agents are used at concentrations of 2-5000 ppm based on the total weight of the monomers depending upon the particular monomers being polymerized and the desired molecular weight. By using such concentrations, macromonomers having the desired molecular weight can be conveniently prepared.

To make distinct blocks, the growth of each block needs to occur at high conversions. Conversions can be determined by size exclusion chromatography (SEC) via integration of polymers to monomer peak. For UV detection, the polymer response factor must be determined for each polymer/monomer polymerization mixture. Typical conversions can be in a range of from 50% to 100% for each block. Intermediate conversion can lead to block copolymers with a transitioning (or tapering) block where the monomer composition gradually changes to that of the following block as the addition of the monomer or monomer mixture of the next block continues. This may affect polymer properties such as the effectiveness of the dispersant and the overall solubility of the block copolymer. Such transitioning block can be desired and can be achieved by intentionally terminating the polymerization when a desired level of conversion (e.g., >80%) is reached by stopping the addition of the initiators or immediately starting the addition of the monomer or monomer mixture of the next block along with the initiator.

The polymeric pigment dispersant of this invention can be a linear block copolymers having aforementioned transitioning block. For example, when the A-block polymerization reaches a desired level, such as in a range of from 60% to 99% conversion in one embodiment, in a range of from 70% to 95% conversion in another embodiment, in a range of from 80% to 95% conversion in yet another embodiment, some or all of the B-block monomers can be added into the polymerization reaction. In such example, a transitioning block can be polymerized from the A-block monomers that are still remaining and the B-block monomers that are just added. Such transitioning block can be used for fine tuning properties of the linear block copolymer. Examples of such properties can include solubility, stability, and/or reactivity toward film forming components in a coating composition.

Typical solvents that can be used to form the block copolymer can include: alcohols, such as methanol, ethanol, n-propanol, and isopropanol; ketones, such as acetone, butanone, pentanone, and hexanone; alkyl esters of acetic, propionic, and butyric acids, such as ethyl acetate, butyl acetate, and amyl acetate; ethers, such as tetrahydrofuran, diethyl ether, and ethylene glycol and polyethylene glycol monoalkyl and dialkyl ethers such as cellosolves and carbitols; and, glycols such as ethylene glycol and propylene glycol; and mixtures thereof.

Any of the commonly used azo or peroxide type polymerization initiators can be used for preparation of the macromonomer or the block copolymer provided it has solubility in the solution of the solvents and the monomer mixture, and has an appropriate half life at the temperature of polymerization. "Appropriate half life" as used herein is a half-life of 10 minutes to 4 hours. Most preferred can include azo type initiators such as 2,2'-azobis (isobutyronitrile), 2,2'-azobis (2,4-dimethylvaleronitrile), 2,2'-azobis (methylbutyronitrile), and 1,1'-azobis (cyanocyclohexane). Examples of peroxy based initiators are benzoyl peroxide, lauroyl peroxide, t-butyl peroxypivalate, t-butyl peroctoate which may also be used provided they do not adversely react with the chain transfer agents under the reaction conditions for macromonomers.

Any of the conventional acrylic monomers and optionally other ethylenically unsaturated monomers or monomer mixtures can be used to form the individual A, B and optionally, C-blocks of the linear block copolymer of this invention. In one example, the "macromonomer" approach can be used. In such "macromonomer" approach, methacrylate monomers can be used in A-block monomers, B-block monomers, and in C-block monomers if the C-block is desired. Typically, the monomers for each individual block can contain at least 70 mole percent of a methacrylate monomer or methacrylate monomer mixtures. In another example, the A-block monomers, the B-block monomers, and the C-block monomers if the C-block is desired, all comprise at least 90 mole percent of a methacrylate monomer or methacrylate monomer mixtures. The balance of the monomers for each block can be of the type of acrylate, acrylamide, methacrylamide, vinyl aromatics such as styrene, and vinyl esters and can be selected by those skilled in the art.

Monomers suitable for this invention can include one or more monomers selected from unsubstituted or substituted alkyl acrylates, such as those having 1-20 linear or branched carbon atoms in the alkyl group; alkyl methacrylate such as those having 1-20 linear or branched carbon atoms in the alkyl group; cycloaliphatic acrylates; cycloaliphatic methacrylates; aryl acrylates; aryl methacrylates; other ethylenically unsaturated monomers such as acrylonitriles, methacrylonitriles, acrylamides, methacrylamides, N-alkylacrylamides, N-alkylmethacrylamides, N,N- dialkylacrylamides, N,N-dialkylmethacrylamides; vinyl aromatics such as styrene; or a combination thereof.

Monomers that are free from special functional groups, herein referred to as non-functional monomers can also be suitable for this invention. Such non-functional monomers can include various non-functional acrylic monomers such as methyl methacrylate, ethyl methacrylate, propyl methacrylate (all isomers), butyl methacrylate (all isomers), 2-ethylhexyl methacrylate; isobornyl methacrylate, methacrylonitrile, methyl acrylate, ethyl acrylate, propyl acrylate (all isomers), butyl acrylate (all isomers), 2-ethylhexyl acrylate, isobornyl acrylate, acrylonitrile and optionally other ethylenically unsaturated monomers, e.g., vinyl aromatics such as styrene, alpha-methyl styrene, t-butyl styrene, and vinyl toluene.

One advantage of this invention is to have the ability to choose monomers for each or all blocks to produce a linear block copolymer. According to this invention, monomers and monomer mixtures can be selected for each block to produce a copolymer having desired block size, overall ratios of monomers used to form the blocks, molecular weights of the copolymer, functionality in each block, and nature of each block. Each of the blocks in the linear block copolymer of this invention can have different properties, such as solubility, polarity, steric stability, or other functionality such as pigment anchoring functionality or crosslink functionality.

The B-block of the linear block copolymer of this invention comprises one or more polar pigment anchoring groups. The pigment anchoring groups employed in this invention can be an acetoacetyl amine functional group which can be obtained by copolymerizing ethylenically unsaturated monomers containing acetoacetate functional groups into the block and subsequently reacting the acetoacetate functional groups with a primary amine. The reaction product acetoacetyl amine can be a 1/1 molar equivalent adduct of an acetoacetate functional group with a primary amine group. The reaction conditions can be preferably chosen so that 100% of the acetoacetate functional groups are reacted, or as close to 100% as can be reasonably achieved, leaving essentially no unreacted acetoacetate functional groups in the linear block copolymer. Typically, after the block copolymer having the acetoacetate functional groups is formed, primary amine and additional solvent are added to the polymer solution and the reaction is continued until all the acetoacetate functional groups are reacted and the acetoacetyl amine functional groups are formed.

Alternatively, the acetoacetyl amine functional group can be introduced into the B-block of the copolymer by first reacting acetoacetate monomers with a primary amine to produce acetoacetyl amine monomers and subsequently polymerizing the acetoacetyl amine monomers into the B-block.

The A-block is essentially free from said polar pigment anchoring group, such as said acetoacetyl amine functional group.

One example of ethylenically unsaturated acetoacetate monomers that is useful for introduction of acetoacetate functional group into the block copolymer can be acetoacetoxyethyl methacrylate. Examples of other monomers that can be used to introduce acetoacetate functional group into the block copolymer can include acetoacetoxyethyl acrylate, acetoacetoxypropyl methacrylate, acetoacetoxypropyl acrylate, allyl acetoacetate, acetoacetoxybutyl methacrylate, acetoacetoxybutyl acrylate.

Hydroxyl monomers having hydroxyl functional groups can also be suitable for this invention. Polymerizable hydroxy functional monomer can be converted to the corresponding acetoacetate by reaction with diketene or other suitable acetoacetate agent. Alternatively, the hydroxyl groups may be selectively built into the B-block of the block copolymer, through the use of hydroxyl monomers. They are subsequently treated with acetoacetate agent such as t-butyl acetoacetate at elevated temperature and converted to the acetoacetate functional groups.

Examples of primary amines which are useful for forming the acetoacetyl amine functional groups as pigment anchoring groups can include aromatic amines, aliphatic amines, and primary amines containing heterocyclic groups. Aromatic amines that can be used include N-benzylamine, phenethylamine, 4-phenylbutylamine, 2,2-diphenylethylamine. Aliphatic amines can also be used such as propylamine, butylamine, aminoethanol, 2-amino-1-butanol, N,N-dimethylaminopropylamine. Primary amines containing heterocyclic groups can also be advantageously used because additional interactions between the heterocyclic groups and the pigment surfaces may further enhance the dispersion stability. The heterocyclic group can be a mono- or dinuclear five to seven member ring containing one or more nitrogen atoms as part of the ring and optionally an oxygen and/or sulfur atom. Useful examples can include 4-(aminoethyl)morpholine, 2-(2-aminoethyl)-1-methyl pyrrolidine, 1-(2-aminoethyl) pyrrolidine, 2-(2-aminoethyl) pyridine, 1-(2-aminoethyl) piperazine, 1-(2-aminoethyl) piperidine, 1-(3-aminopropyl) imidazole, 4-(3-aminopropyl) morpholine, 1-(3-aminopropyl)-2-pipecoline, 1-(3-aminopropyl)-2-pyrrolidinone. Primary amines containing heterocyclic imidazole groups are particularly preferred.

The primary amine can contain both primary amine functionality, for acetoacetyl amine formation, and tertiary amine functionality. In this case, the tertiary amine functional block copolymer can be, and preferably is, treated with a proton source or an alkylating agent to form a cationic quaternary ammonium group on the block copolymer as additional pigment anchoring group. Total alkylation should be at least 30% of the tertiary amine moieties, preferably at least 50% up to 100%. Typical alkylation agents can include aralkyl halides, alkyl halides, alkyl toluene sulfonate, or trialkyl phosphates halides. Alkylation agents which have been found to be particularly satisfactory can include, benzyl chloride, methyl toluene sulfonate, and dimethyl sulfate.

The amount of acetoacetate monomer required can vary depending upon the desired degree of pigment anchoring necessary for a particular end use application. Generally, the concentration of acetoacetate monomers that are used to form the pigment anchoring groups in the B-block of the copolymer can be at least 1 % by weight, based on the total weight of the B-block of the block copolymer, to provide appropriate pigment anchoring functionality to the block copolymer. At lower concentrations, there may not be sufficient interaction with the pigment to avoid flocculation, particularly in more polar solvents. The preferred concentration of these monomers can be in a range of from 2% to 100% by weight, and more preferably in a range of from 5% to 70% by weight, based on the total weight of the B-block of the block copolymer.

In addition to the acetoacetyl amine and the aforementioned cationic quaternary ammonium group pigment anchoring groups, the B-block of the block copolymer can further comprise one or more additional pigment anchoring groups. Examples of useful pigment anchoring groups that are suitable in conjunction with acetoacetyl amine anchoring groups, can include acyclic or cyclic amide groups. These pigment anchoring groups can be obtained by copolymerizing ethylenically unsaturated monomers containing acyclic or cyclic amide groups into the B-block during polymerization. Acrylic, methacrylic and other vinyl amide monomers can be preferred.

Examples of monomers that can be used to introduce acyclic amide groups can include methacrylamides such as N-methylmethacrylamide, N-ethylmethacrylamide, N-octylmethacrylamide, N-dodecylmethacrylamide, N-(isobutoxymethyl)methacrylamide, N-phenylmethacrylamide, N-benzyl methacrylamide, N,N-dimethyl methacrylamide and acrylamides such as N-methylacrylamide, N-ethylacrylamide, N-t-butylacrylamide, N-(isobutoxymethyl)acrylamide, N,N-dimethylacrylamide, N,N-diethylacrylamide, N,N-dibutylacrylamide. Other monomers that can be used to introduce cyclic amide groups can include methacrylic and acrylic and other vinyl monomers bearing cyclic amide groups, especially N-vinyl-2-pyrrolidinone. Generally, the B-block of the block copolymers may contain up to 50% by weight, based on the total weight of the copolymer, of such amide functional monomers.

In addition to the pigment anchoring groups described above, the block copolymer may also contain, up to 30% by weight, based on the total weight of the block copolymer, of ethylenically unsaturated monomers that contain functional groups, such as hydroxyl groups, that will react with the film forming components present in a coating composition which in turn enables the dispersant to become a permanent part of the final network of cured coating. This structure enhances film adhesion, improves the overall mechanical properties of the paint in general, and prevents deterioration or delamination of the film upon aging, as may occur if the dispersant remains an unreacted component. The hydroxyl groups, for example, may be placed in the A-block, the pigment anchoring B-block, or the C-block if the C-block is desired and present. The preferred location is in the B-block with the pigment anchoring groups.

While a wide variety of ethylenically unsaturated monomers can be used to introduce hydroxyl groups into the desired blocks during its polymerization, acrylic monomers and in particular hydroxy functional acrylate and methacrylate monomers can be preferred. Hydroxyl group containing methacrylates that can be used can include 2-hydroxyethyl methacrylate, 3-hydroxypropyl methacrylate, 4-hydroxylbutyl methacrylate. Hydroxyl group containing acrylates that can be used can include 2-hydroxyethyl acrylate, 3-hydroxypropyl acrylate, 4-hydroxybutyl acrylate.

In one embodiment, the linear block copolymer of this invention is a diblock copolymer and comprises: (a) a linear A-block formed by polymerizing ethylenically unsaturated A-block monomers; and (b) a linear B-block comprising one or more acetoacetyl amine functional groups as pigment anchoring groups, said linear B-block is formed by polymerizing ethylenically unsaturated B-block monomers; wherein said linear A-block is essentially free from said acetoacetyl amine functional groups.

The B-block monomers can comprise an acetoacetate monomer having one or more acetoacetate functional groups, and wherein said acetoacetyl amine functional groups in said linear block copolymer are formed by reacting said acetoacetate functional groups with a primary amine.

Alternatively, the acetoacetate monomer can be reacted with the primary amine to convert said acetoacetate functional group into acetoacetyl amine group before polymerization.

The B-block monomers can also comprise a hydroxyl monomer having one or more hydroxyl functional groups, wherein said acetoacetyl amine functional groups are formed by first reacting said hydroxyl functional groups with an acetoacetate agent, such as t-butyl acetoacetate, to convert part or all of said hydroxyl functional groups to acetoacetate functional groups and then reacting said acetoacetate functional groups with a primary amine to form said acetoacetyl amine functional groups. The amount of said hydroxyl monomers and reaction conditions for converting said hydroxyl functional groups to said acetoacetyl amine functional groups can be determined so that the B-block of the copolymer can have at least 1 % by weight, preferred in a range of from 2% to 100%, based on the total weight of the B-block, of said acetoacetyl amine functional groups to provide appropriate pigment anchoring functionality to the block copolymer.

The B-block monomers can also comprise a combination of the hydroxyl monomer having one or more hydroxyl functional groups and the acetoacetate monomer having one or more acetoacetate functional groups. The acetoacetate functional groups can be reacted with the primary amine to form the acetoacetyl amine functional groups resulting in a linear block copolymer having hydroxyl functional groups and acetoacetyl amine functional groups in the B-block. In one example, the B-block monomer can comprise a hydroxyl monomer such as hydroxyethyl acrylate (HEA) and an acetoacetate monomer such as acetoacetylethyl methacrylate (AAEM). A primary amine, such as 3-aminopropyl imidazole can be used to react with the acetoacetate functional groups either before or after polymerization to form the acetoacetyl amine functional groups.

The B-block can further comprise, as pigment anchoring groups, one or more acyclic amide groups, one or more cyclic amide groups, one or more cationic quaternary ammonium groups (also referred to as quaternary ammonium groups), or a combination thereof.

The A-block monomers can also comprise hydroxyl functional monomers resulting a linear block polymer having hydroxyl functional groups in the A-block.

In another embodiment, the linear block copolymer can be a linear triblock copolymer. The linear triblock copolymer can comprise: (a) a linear A-block formed by polymerizing ethylenically unsaturated A-block monomers; and (b) a linear B-block comprising one or more acetoacetyl amine functional groups as pigment anchoring groups, said linear B-block is formed by polymerizing ethylenically unsaturated B-block monomers; (c) a linear C-block formed by polymerizing ethylenically unsaturated C-block monomers; wherein said linear A-block and said C-block are essentially free from said acetoacetyl amine functional groups. The A-block and the C-block can be the same or different. If both the A-block and the C-block are formed from the same selection of monomers, the triblock copolymer can also be referred to as an ABA-triblock copolymer.

The B-block of the linear triblock copolymer can comprise hydroxyl functional groups.

The B-block of the linear triblock copolymer can further comprise, as pigment anchoring groups, one or more acyclic amide groups, one or more cyclic amide groups, one or more quaternary ammonium groups, or a combination thereof.

The A-block monomers and optionally, said C-block monomers of the triblock copolymer can comprise one or more hydroxyl monomers having hydroxyl functional groups.

This invention is further directed to a process for producing a linear block copolymer comprising one or more acetoacetayl amine functional groups as pigment anchoring groups.

In one embodiment, the process comprises the steps of:
(A) forming a linear A-block by polymerizing ethylenically unsaturated A-block monomers using free radical polymerization in the presence of a catalytic chain transfer agent;
(B) forming a linear AB-diblock copolymer having said linear A-block and a B-block by polymerizing said linear A-block and ethylenically unsaturated B-block monomers comprising acetoacetate monomers having acetoacetate functional groups;
(C) optionally, forming a linear ABC-triblock copolymer having said linear AB-diblock copolymer and an C-block by polymerizing said linear AB-diblock copolymer and ethylenically unsaturated C-block monomers; and
(D) reacting said acetoacetate functional groups with a primary amine to form said acetoacetyl amine functional groups in said linear block copolymer;
wherein said linear A-block, and said C-block when present, are essentially free from said acetoacetyl amine functional groups, and wherein said A-block monomers and said C-block monomers are the same or different.

The acetoacetate monomers can be selected from acetoacetoxyethyl methacrylate, acetoacetoxyethyl acrylate, acetoacetoxypropyl methacrylate, acetoacetoxypropyl acrylate, allyl acetoacetate, acetoacetoxybutyl methacrylate, acetoacetoxybutyl acrylate, or a combination thereof.

The B-block monomers can further comprise monomers having functional groups selected from one or more hydroxyl groups, one or more acyclic amide groups, one or more cyclic amide groups, one or more quaternary ammonium groups, or a combination thereof.

In another embodiment, the process comprises the steps of:
(A) forming a linear A-block by polymerizing ethylenically unsaturated A-block monomers using free radical polymerization in the presence of a catalytic chain transfer agent, wherein said A-block monomers are essentially free from hydroxyl monomers having hydroxyl functional groups;
(B) forming a linear AB-diblock copolymer having said linear A-block and a B-block by polymerizing said linear A-block and ethylenically unsaturated B-block monomers comprising one or more hydroxyl monomers having hydroxyl functional groups;
(C) optionally, forming a linear ABC-triblock copolymer having said linear AB-diblock copolymer and a C-block by polymerizing said linear AB-diblock copolymer and ethylenically unsaturated C-block monomers, wherein said C-block monomers are essentially free from said hydroxyl monomers;
(D) reacting said hydroxyl functional groups with an acetoacetate agent to convert said hydroxyl functional groups to acetoacetate functional groups; and
(E) reacting said acetoacetate functional groups with a primary amine to form said acetoacetyl amine functional groups in said block copolymer;
wherein said linear A-block, and said C-block when present, are essentially free from said acetoacetyl amine functional groups, and wherein said A-block monomers and said C-block monomers are the same or different.

The hydroxyl monomer can be selected from hydroxyl group containing acrylate, hydroxyl group containing methacrylate, or a combination thereof. The acetoacetate agent can be t-butyl acetoacetate.

The B-block monomers can further comprise monomers having functional groups selected from one or more acyclic amide groups, one or more cyclic amide groups, one or more quaternary ammonium groups, or a combination thereof.

In yet another embodiment, the process comprises the steps of:
(A) forming a linear A-block by polymerizing ethylenically unsaturated A-block monomers using free radical polymerization in the presence of a catalytic chain transfer agent;
(B) forming a linear AB-diblock copolymer having said linear A-block and a B-block by polymerizing said linear A-block and ethylenically unsaturated B-block monomers comprising acetoacetyl amine monomers having acetoacetyl amine functional groups; and
(C) optionally, forming a linear ABC-triblock copolymer having said linear AB-diblock copolymer and a C-block by polymerizing said linear AB-diblock copolymer and ethylenically unsaturated C-block monomers; and
wherein said linear A-block, and said C-block when present, are essentially free from said acetoacetyl amine functional groups, and wherein said A-block monomers and said C-block monomers are the same or different.

The B-block monomers can further comprise monomers having functional groups selected from one or more hydroxyl groups, one or more acyclic amide groups, one or more cyclic amide groups, one or more quaternary ammonium groups, or a combination thereof.

In any of the aforementioned embodiments, when the A-block monomers and the C-block monomers are the same, the linear block copolymer can be an ABA-triblock copolymer. When the A-block monomers and the C-block monomers are different, the linear block copolymer can be an ABC-triblock copolymer.

In any of the aforementioned embodiments, the primary amine can be selected from aliphatic, aromatic, heterocyclic compounds containing primary amine groups, or a combination thereof. Examples of primary amines that are suitable for this invention can include N-benzylamine, phenethylamine, 4-phenylbutylamine, 2,2-diphenylethylamine, propylamine, butylamine, aminoethanol, 2-amino-1-butanol, N,N-dimethylaminopropylamine, 4-(aminoethyl)morpholine, 2-(2-aminoethyl)-1-methyl pyrrolidine, 1-(2-aminoethyl) pyrrolidine, 2-(2-aminoethyl) pyridine, 1-(2-aminoethyl) piperazine, 1-(2-aminoethyl) piperidine, 1-(3-aminopropyl) imidazole, 4-(3-aminopropyl) morpholine, 1-(3-aminopropyl)-2-pipecoline, 1-(3-aminopropyl)-2-pyrrolidinone, or a combination thereof.

It is preferred that said linear A-block is polymerized with free radical polymerization in the presence of a catalytic chain transfer agent. The A-block so formed can have a terminal polymerizable double bond. Any aforementioned cobalt catalytic chain transfer agents or other transfer agents that are capable of terminating the free radical polymer chain and forming a "marcromonomer" with a terminal polymerizable double bond can be suitable for this invention.

The linear block copolymer of this invention can have a weight average molecular weight of in a range of from 2,000-100,000 in one example, and 3,000-100,000 in another example.

While not wishing to be bound by any particular theory, these block copolymers when used as pigment dispersants are thought to work by anchoring onto and forming a layer of polymer surrounding the pigment particle, which layer extends into the surrounding solvent medium to provide steric stabilization of the pigment particles. The pigment particles then do not come close enough to one another to flocculate, unless there is insufficient interaction between the polymeric dispersant and the pigment surfaces. The pigment anchoring groups employed herein have been found to effectively interact with a much wider range of pigments, which enables the block copolymers of the present invention to be selectively adsorbed by a wider range of pigments and not be displaced from pigment surfaces by polar solvents or other polar functional groups present in the coating system which could compete for adsorption on the pigment surfaces. Stable and non-flocculating dispersions or millbases can thus easily be formed from the block copolymers of this invention. Typically, B-block of the block copolymer of this invention can comprise the pigment anchoring groups while the A-block or the C-block can be essentially free from said pigment anchoring groups.

To form a pigment dispersion or a millbase, pigments are typically added to the block copolymer in organic solvent or blend mixture of solvents and are dispersed using conventional techniques such as high speed mixing, ball milling, sand grinding, attritor guiding, or two or three roll milling. The resulting pigment dispersion can have a dispersant to pigment weight ratio of in a range of from 0.1/100 to 200/100. If insufficient amount of block copolymer dispersant is present, the dispersion stability is adversely affected.

Any of conventional pigments used in coatings can be used to form a pigment dispersion using the polymeric pigment dispersant of this invention. Examples of suitable pigments can include metallic oxides such as titanium dioxide, iron oxides of various colors, and zinc oxide; carbon black; filler pigments such as talc, china clay, barytes, carbonates, and silicates; a wide variety of organic pigments such as quinacridones, phtalocyanines, perylenes, azo pigment, and indanthrones carbazoles such as carbazole violet, isoindolinones, isoindolons, thioindigio reds, and benzimidazolinones; and metallic flakes such as aluminum flake, pearlescent flakes.

It may be desirable to add other optional ingredients to the pigment dispersion, such as antioxidants, flow control agents, UV stabilizers, light quenchers and absorbers, and rheology control agents such as fumed silica and microgels. Other film forming polymers can also be added, such as acrylics, acrylourethanes, polyester urethanes, polyesters, alkyds, polyethers.

Pigment dispersions of this invention can be added to a variety of solvent borne coating or paint compositions such as primers, primer surfacers, topcoats which may be monocoats, or basecoats of a clearcoat/basecoat finish. These compositions can contain film-forming polymers such as hydroxy functional acrylic and polyester resins and crosslinking agents such as blocked isocyanates, alkylated melamines, polyisocyanates, epoxy resins. Preferably, the block copolymer contains functional groups that will become part of the final network structure by reacting with the crosslinking agents.

The following examples illustrate the invention. All parts and percentages are on a weight basis unless otherwise indicated. All molecular weights are determined by (GPC) gel permeation chromatography using a polymethyl methacrylate standard. Mn represents number average molecular weight and Mw represents weight average molecular weight. All viscosity measurements are reported using a Gardner Holtz scale.

### EXAMPLES

### Example 1

### Preparation of BMA/MMA macromonomer. 70/30% by weight

This example illustrates the preparation of a macromonomer. A 12-liter flask was equipped with a thermometer, stirrer, additional funnels, heating mantel, reflux condenser and a means of maintaining a nitrogen blanket over the reactants. The flask was held under nitrogen positive pressure and the following ingredients were employed.

**Table 1.Ingredients.**

| **Portion 1** | **Weight (gram)** |
|---|---|
| Methyl ethyl ketone | 707.54 |
| Methyl methacrylate (MMA) | 257.40 |
| Butyl methacrylate (BMA) | 600.50 |

| **Portion 2** | |
|---|---|
| Diaquabis(borondifluorodiphenyl glyoximato) cobaltate (II), Co(DPG-BF₂) | 0.1376 |
| Methyl ethyl ketone | 372.41 |

| **Portion 3** | |
|---|---|
| 2,2'-Azobis(methylbutyronitrile) (Vazo® 67 by DuPont Co., Wilmington, DE) | 24.77 |
| Methyl ethyl ketone | 363.52 |

| **Portion 4** | |
|---|---|
| Methyl methacrylate (MMA) | 1244.10 |
| Butyl methacrylate (BMA) | 2902.90 |
| Methyl ethyl ketone | 232.74 |

| **Portion 5** | |
|---|---|
| t-butyl peroctoate (97% min, Elf Atochem North America, Inc., Philadelphia, PA) | 75.00 |
| Methyl ethyl ketone | 918.9 |
| **Total** | 7699.92 |

Portion 1 mixture was charged to the flask. Portion 2 was prepared by dissolving the cobalt catalyst completely and also charged to the flask. The reaction mixture was heated to reflux temperature and refluxed for about 20 minutes. Portion 3, 30.24% (117.42 gm) was fed to the flask over 10 minutes. The reaction mixture was heated and held at reflux for 10 minutes. The remainder of Portion 3, 270.87 gm, was fed to the flask over 150 minutes while Portion 4, 12.5% (518.4 gm), was simultaneously fed to the flask over 120 minutes, and the reaction mixture was held at reflux temperature throughout the course of additions. Reflux was continued for another 2 hours. The remainder of Portion 4, 3628.6 gm, was then fed to the flask simultaneously with Portion 5 over 180 minutes. The reaction mixture was then held at reflux for 2 hours.

After cooling the resulting macromonomer solution was a light yellow clear polymer solution and had a solid content of about 62.9% and a Gardner-Holtz viscosity of F. The macromonomer had a 5,972 Mw and 3,493 Mn.

### Example 2

The procedure of Example 1 was repeated with 0.1239 gm of diaquabis(borondifluorodiphenyl glyoximato) cobaltate (II), Co(DPG-BF₂) to prepare a macomonomer BMA/MMA (70/30) with a slightly higher molecular weight. The resulting macromonomer solution was a light yellow clear polymer solution and had a solid content of about 64.2% and a Gardner-Holtz viscosity of H. The macromonomer had a 6,237 Mw and 3,545 Mn.

### Example 3

### Preparation of a diblock dispersant

This example shows the preparation of a diblock copolymer of this invention containing acetoacetyl/aromatic amine groups, specifically 2-hydroxyethyl methacrylate-*co*-2-acetoacetoxyethyl methacrylate (1-(3-aminopropyl)imidazole)-b-methyl methacrylate-co-butyl methacrylate, 13.79/13.79(8.07)//19.31/45.05% by weight.

A 5-liter flask was equipped as in Example 1. The flask was held under nitrogen positive pressure and the following ingredients were employed.

**Table 2.Ingredients.**

| **Portion 1** | **Weight (gram)** |
|---|---|
| Macromonomer from Example 1 | 1421.54 |
| Butyl acetate | 82.0 |

| **Portion 2** | |
|---|---|
| 2-acetoacetoxyethyl methacrylate (AAEM) | 198.0 |
| 2-hydroxyethyl methacrylate (HEMA) | 198.0 |

| **Portion 3** | |
|---|---|
| t-butyl peroctoate(97% min, Elf Atochem North America, Inc., Philadelphia, PA) | 16.5 |
| Butyl acetate | 182.0 |

| **Portion 4** | |
|---|---|
| t-butyl peroctoate (Elf Atochem North America, Inc., Philadelphia, PA) | 1.65 |
| Butyl acetate | 18.2 |

| **Portion 5** | |
|---|---|
| 1-(3-aminopropyl)imidazole (Aldrich Chemical Co. Inc., Milwaukee, WI) | 110.35 |
| Butyl acetate | 751.66 |
| **Total** | 2979.9 |

Portion 1 was charged to the flask and the mixture was heated to reflux temperature and refluxed for about 10 minutes. Portions 2 and 3 were simultaneously fed to the flask over 3 hours while the reaction mixture was held at reflux temperature throughout the course of additions. The reaction mixture was refluxed for additional 30 minutes. Portion 4 was fed to the flask over 10 minutes, and the reaction mixture was refluxed for another 2 hours. After cooling, a 100 gm sample was extracted for use as Comparative Example 3 in the evaluation of dispersant properties. Portion 5 mixture was added and the reaction mixture was heated back to reflux and held at reflux for 1 hour. After cooling a 46.6 % light yellow clear polymer solution with a Gardner-Holtz viscosity of H was obtained. The block copolymer before reaction with 1-(3-aminopropyl)imidazole had a 7,487 Mw and 4,497 Mn.

### Example 4

### Preparation of a diblock dispersant having amine and amide groups

This example shows the preparation of a diblock copolymer of this invention containing acetoacetyl/aromatic amine groups and amide groups, specifically N,N-dimethyl acrylamide-*co*-2-hydroxyethyl methacrylate-*co*-2-acetoacetoxyethyl methacrylate (1-(3-aminopropyl)imidazole)-b-methyl methacrylate-co-butyl methacrylate, 9.24/9.24/12.94(7.57)//18.30/42.70% by weight.

A 5-liter flask was equipped as in Example 1. The flask was held under nitrogen positive pressure and the following ingredients were employed.

**Table 3.Ingredients.**

| **Portion 1** | **Weight (gram)** |
|---|---|
| Macromonomer from Example 2 | 1340.31 |
| Ethyl acetate | 80.0 |

| **Portion 2** | |
|---|---|
| N,N-dimethyl acrylamide | 132.0 |
| 2-acetoacetoxyethyl methacrylate (AAEM) | 184.8 |
| 2-hydroxyethyl methacrylate (HEMA) | 132.0 |

| **Portion 3** | |
|---|---|
| t-butyl peroctoate(97% min, Elf Atochem North America, Inc., Philadelphia, PA) | 16.5 |
| Ethyl acetate | 182.0 |

| **Portion 4** | |
|---|---|
| t-butyl peroctoate (Elf Atochem North America, Inc., Philadelphia, PA) | 1.65 |
| Ethyl acetate | 18.2 |

| **Portion 5** | |
|---|---|
| 1-(3-aminopropyl)imidazole (Aldrich Chemical Co. Inc., Milwaukee, WI) | 102.92 |
| Amyl acetate | 750.0 |

| **Portion 6** | |
|---|---|
| Amyl acetate | 585.46 |
| **Total** | 3425.84 |

Portion 1 was charged to the flask and the mixture was heated to reflux temperature and refluxed for about 10 minutes. Portions 2 and 3 were simultaneously fed to the flask over 3 hours while the reaction mixture was held at reflux temperature throughout the course of additions. The reaction mixture was refluxed for additional 30 minutes. Portion 4 was fed to the flask over 10 minutes, and the reaction mixture was refluxed for another 2 hours. After cooling, a 100 gm sample was extracted for molecular weight analysis. Portion 5 mixture was added and the reaction mixture was heated back to reflux and 680 gm of a solvent mixture was removed by distillation. The reaction mixture was then held at reflux for 1 hour. Portion 6 was added. After cooling a 49.8 % light yellow clear polymer solution with a Gardner-Holtz viscosity of W+1/2 was obtained. The block copolymer before reaction with 1-(3-aminopropyl)imidazole had a 14,749 Mw and 5,817 Mn.

### Example 5

### Preparation of a triblock dispersant

This example shows the preparation of a triblock copolymer of this invention containing acetoacetyl/aromatic amine groups in the center block, specifically methyl methacrylate-*co*-butyl methacrylate-*b*-2-hydroxyethyl methacrylate-*co*-2-acetoacetoxyethyl methacrylate (1-(3-aminopropyl)imidazole)-b-methyl methacrylate-co-butyl methacrylate, 23.11/23.11//10.17/12.94(7.57)//6.93/16.18% by weight.

A 5-liter flask was equipped as in Example 1. The flask was held under nitrogen positive pressure and the following ingredients were employed.

**Table 4.Ingredients.**

| **Portion 1** | **Weight (gram)** |
|---|---|
| Macromonomer from Example 2 | 538.46 |
| Ethyl acetate | 80.0 |

| **Portion 2** | |
|---|---|
| 2-acetoacetoxyethyl methacrylate (AAEM) | 196.0 |
| 2-hydroxyethyl methacrylate (HEMA) | 154.0 |

| **Portion 3** | |
|---|---|
| t-butyl peroctoate(97% min, Elf Atochem North America, Inc., Philadelphia, PA) | 10.0 |
| Ethyl acetate | 125.0 |

| **Portion 4** | |
|---|---|
| t-butyl peroctoate (Elf Atochem North America, Inc., Philadelphia, PA) | 1.0 |
| Ethyl acetate | 12.5 |

| **Portion 5** | |
|---|---|
| Methyl methacrylate (MMA) | 350.0 |
| Butyl methacrylate (BMA) | 350.0 |

| **Portion 6** | |
|---|---|
| t-butyl peroctoate (Elf Atochem North America, Inc., Philadelphia, PA) | 17.5 |
| Ethyl acetate | 300.0 |

| **Portion 7** | |
|---|---|
| t-butyl peroctoate (Elf Atochem North America, Inc., Philadelphia, PA) | 1.75 |
| Ethyl acetate | 30.0 |

| **Portion 8** | |
|---|---|
| 1-(3-aminopropyl)imidazole (Aldrich Chemical Co. Inc., Milwaukee, WI) | 114.65 |
| Amyl acetate | 750.0 |

| **Portion 9** | |
|---|---|
| Amyl acetate | 638.43 |
| **Total** | 3669.29 |

Portion 1 was charged to the flask and the mixture was heated to reflux temperature and refluxed for about 10 minutes. Portions 2 and 3 were simultaneously fed to the flask over 3 hours while the reaction mixture was held at reflux temperature throughout the course of additions. The reaction mixture was refluxed for additional 30 minutes. Portion 4 was fed to the flask over 10 minutes, and the reaction mixture was refluxed for another 2 hours. After cooling, a small sample was extracted for analytical purposes. The reaction mixture was heated to reflux and Portion 5 and 6 were simultaneously fed to the flask over 3 hours. The reaction mixture was refluxed for another 30 minutes. Portion 7 was added over 10 minutes, and the reaction mixture was refluxed for 2 more hours. After cooling, a small sample was extracted for analytical purposes. Portion 8 mixture was added and the reaction mixture was heated back to reflux and 640 gm of a solvent mixture was removed by distillation. The reaction mixture was then held at reflux for 1 hour. Portion 9 was added. After cooling a 49.6 % light yellow clear polymer solution with a Gardner-Holtz viscosity of T+1/2 was obtained.

The analytical results showed that at the end of the formation of the center block the monomer conversion was >98%, and the block copolymer had a 11,784 Mw and 5,643 Mn. At the end of the formation of the third block the triblock copolymer before reaction with 1-(3-aminopropyl)imidazole had a 20,029 Mw and 9,125 Mn.

### Example 6

### Preparation of a triblock dispersant having amine and amide groups

This example shows the preparation of a triblock copolymer of this invention containing acetoacetyl/aromatic amine and amide groups in the center block, specifically methyl methacrylate-*co*-butyl methacrylate-b-N,N-dimethyl acrylamide-*co*-2-hydroxyethyl methacrylate-*co*-2-acetoacetoxyethyl methacrylate (1-(3-aminopropyl)imidazole)-*b*-methyl methacrylate-co-butyl methacrylate, 17.75/17.75//5.61/7.48/11.21(6.56)//10.09/23.55% by weight.

A 2-literflask was equipped as in Example 1. The flask was held under nitrogen positive pressure and the following ingredients were employed.

**Table 5.Ingredients.**

| **Portion 1** | **Weight (gram)** |
|---|---|
| Macromonomer from Example 2 | 446.65 |
| Ethyl acetate | 45.8 |

| **Portion 2** | |
|---|---|
| N,N-dimethyl acrylamide | 48.39 |
| 2-acetoacetoxyethyl methacrylate (AAEM) | 96.77 |
| 2-hydroxyethyl methacrylate (HEMA) | 64.52 |

| **Portion 3** | |
|---|---|
| t-butyl peroctoate(97% min, Elf Atochem North America, Inc., Philadelphia, PA) | 7.1 |
| Ethyl acetate | 83.3 |

| **Portion 4** | |
|---|---|
| t-butyl peroctoate (Elf Atochem North America, Inc., Philadelphia, PA) | 0.71 |
| Ethyl acetate | 8.33 |

| **Portion 5** | |
|---|---|
| Methyl methacrylate (MMA) | 153.23 |
| Butyl methacrylate (BMA) | 153.23 |

| **Portion 6** | |
|---|---|
| t-butyl peroctoate (Elf Atochem North America, Inc., Philadelphia, PA) | 10.0 |
| Ethyl acetate | 166.67 |

| **Portion 7** | |
|---|---|
| t-butyl peroctoate (Elf Atochem North America, Inc., Philadelphia, PA) | 1.0 |
| Ethyl acetate | 16.67 |

| **Portion 8** | |
|---|---|
| 1-(3-aminopropyl)imidazole (Aldrich Chemical Co. Inc., Milwaukee, Wl) | 56.61 |
| Amyl acetate | 420.0 |

| **Portion 9** | |
|---|---|
| Amyl acetate | 367.16 |
| **Total** | 2146.14 |

The procedure of Example 5 was repeated except that approximately 420 gm of a solvent mixture was removed towards the end of the process. After cooling a 48.9 % light yellow slightly hazy polymer solution with a Gardner-Holtz viscosity of Y+1/2 was obtained.

The analytical results showed that at the end of the formation of the center block the monomer conversion was >95%, and the block copolymer had a 19,594 Mw and 6,298 Mn. At the end of the formation of the third block the triblock copolymer before reaction with 1-(3-aminopropyl)imidazole had a 28,233 Mw and 8,686 Mn.

### Example 7

### Preparation of a triblock dispersant having amine and quaternary ammonium groups

This example shows the preparation of a triblock copolymer of this invention containing acetoacetyl/aromatic amine and quaternary ammounium groups, specifically butyl methacrylate-co-methyl methacrylate-*b*-2-hydroxyethyl methacrylate-*co*-2-acetoacetoxyethyl methacrylate (1-(3-aminopropyl)imidazole/methyl p-toluenesulfonate)-*b*-methyl methacrylate-co-butyl methacrylate, 22.39/22.3//9.85/12.54(7.33/3.12)//6.71/15.68% by weight.

A 0.5-liter flask was equipped as in Example 1. The flask was held under nitrogen positive pressure and the following ingredients were employed.

**Table 6.Ingredients.**

| **Portion 1** | **Weight (gram)** |
|---|---|
| Triblock dispersant of Example 5 | 200.00 |
| Methyl p-toluenesulfonate | 3.20 |
| Amyl acetate | 10.30 |
| **Total** | 213.5 |

Portion 1 was charged to refluxed and heated to 120C and the temperature was held for 2 hours. After cooling, a 46.0% yellow clear polymer solution with a Gardner-Holtz viscosity of N was obtained.

### Comparative Example 1 (C1)

This shows the preparation of a random copolymer having similar overall composition in comparison to the above examples of this invention, specifically N-vinyl pyrrolidinone-co-2-hydroxyethyl acrylate-*co*-2-acetoacetoxyethyl methacrylate (1-(3-aminopropyl)imidazole)-*co*-butyl methacrylate-co-methyl methacrylate, 9.34/7.48/11.21 (6.56)/28.03/37.38% by weight.

A 2-liter flask was equipped as in Example 1. The flask was held under nitrogen positive pressure and the following ingredients were employed.

**Table 7.Ingredients.**

| **Portion 1** | **Weight (gram)** |
|---|---|
| Ethyl acetate | 175.0 |

| **Portion 2** | |
|---|---|
| N-vinyl pyrrolidinone | 70.0 |
| 2-hydroxyethyl acrylate | 56.0 |
| 2-acetoacetoxyethyl methacrylate | 84.0 |
| Butyl methacrylate | 210.0 |
| Methyl methacrylate | 280.0 |

| **Portion 3** | |
|---|---|
| 2,2'-azobis(2,4-dimethylvaleronitrile) (Vazo® 52 by DuPont Co., Wilmington, DE) | 31.82 |
| Ethyl acetate | 200.0 |

| **Portion 4** | |
|---|---|
| 2,2'-azobis(2,4-dimethylvaleronitrile) (Vazo® 52 by DuPont Co., Wilmington, DE) | 3.18 |
| Ethyl acetate | 20.0 |

| **Portion 5** | |
|---|---|
| 1-(3-aminopropyl)imidazole | 49.14 |
| Amyl acetate | 350.0 |

| **Portion 6** | |
|---|---|
| Amyl acetate | 319.13 |
| **Total** | 1848.27 |

Portion 1 was charged to the flask and the solvent was heated to reflux temperature and refluxed for about 10 minutes. Portions 2 and 3 were simultaneously added over 3 hours while the reaction mixture was held at reflux temperature. The reaction mixture was refluxed for 30 minutes. Portion 4 was added over 10 minutes, and the reaction mixture was refluxed for another 1 1/2 hours. Portion 5 mixture was added and 350 grams of a solvent mixture was removed by distillation. The reaction mixture was refluxed for another hour. After cooling, Portion 6 was added to yield a 52.3 % polymer solution with a Gardner-Holtz viscosity of Z1. The random copolymer before reaction with 1-(3-aminopropyl)imidazole had a 13,277 Mw and 6,646 Mn.

### Comparative Example 2 (C2)

This shows the preparation of a random copolymer having similar overall composition and also a higher molecular weight in comparison to the above examples of this invention, specifically N,N-dimethyl acrylamide-*co*-2-hydroxyethyl acrylate-*co*-2-acetoacetoxyethyl methacrylate (1-(3-aminopropyl)imidazole)-co-butyl methacrylate-co-methyl methacrylate, 9.34/7.48/11.21 (6.56)/28.03/37.38% by weight.

A 2-liter flask was equipped as in Example 1. The flask was held under nitrogen positive pressure and the following ingredients were employed.

**Table 8.Ingredients.**

| **Portion 1** | **Weight (gram)** |
|---|---|
| Ethyl acetate | 180.0 |

| **Portion 2** | |
|---|---|
| N,N-dimethyl acrylamide | 70.0 |
| 2-hydroxyethyl acrylate | 56.0 |
| 2-acetoacetoxyethyl methacrylate | 84.0 |
| Butyl methacrylate | 210.0 |
| Methyl methacrylate | 280.0 |

| **Portion 3** | |
|---|---|
| 2,2'-azobis(2,4-dimethylvaleronitrile) (Vazo® 52 by DuPont Co., Wilmington, DE) | 9.55 |
| Ethyl acetate | 200.0 |

| **Portion 4** | |
|---|---|
| 2,2'-azobis(2,4-dimethylvaleronitrile) (Vazo® 52 by DuPont Co., Wilmington, DE) | 0.96 |
| Ethyl acetate | 20.0 |

| **Portion 5** | |
|---|---|
| 1-(3-aminopropyl)imidazole | 49.14 |
| Amyl acetate | 384.15 |

| **Portion 6** | |
|---|---|
| Amyl acetate | 366.9 |
| **Total** | 1910.7 |

The procedure of Comparative Example 1 was repeated to yield a 48.0 % polymer solution with a Gardner-Holtz viscosity of Z2+1/4. The random copolymer before reaction with 1-(3-aminopropyl)imidazole had a 36,232 Mw and 14,873 Mn.

### Comparative Example 3 (C3)

The prepolymer of Example 3 extracted before the AAEM groups were reacted with the amine was used here for comparative purposes. It is a regular graft copolymer containing acetoacetyl groups only, specifically 2-hydroxyethyl methacrylate-2-acetoacetoxyethyl methacrylate-b-methyl methacrylate-co-butyl methacrylate, 15/15//21/49% by weight.

It was a 64.1% clear polymer solution with a Gardner-Holtz viscosity of U+1/2. The diblock copolymer had a 7,487 Mw and 4,497 Mn.

### Dispersant Properties

### Evaluation of Dispersant Properties

The effectiveness of a dispersant was determined by sand-grinding a mixture of pigment, solvent, and the dispersant, and observing the dispersion quality under an Olympus microscope, 40X. The well dispersed system would have a uniform appearance and the pigment particles would show vigorous Brownian motion. In contract, the flocculated systems would have islands of flocculated pigment chunks interspersed with areas of relatively clear solvent.

Dispersion samples were prepared by the following procedure. To a 2 oz. glass bottle, 15 gm of sand, 20 gm of butyl acetate, 2 gm of pigment and 1 gm of the block copolymer dispersant solution were added. The bottle was sealed and agitated on a Red Devil plant shaker for 15 minutes.

**Table 9.Dispersion Evaluation Results.**

| **Pigment** | **E3** | **E4** | **E5** | **E6** | **E7** | **C1** | **C2** | **C3** |
|---|---|---|---|---|---|---|---|---|
| **1** | D | D | D | D | D | F | F | D |
| **2** | F | D | F | D | F | D | F | F |
| **3** | na | D | D | D | D | F | F | na |
| **4** | D | na | na | na | na | na | na | F |
| **5** | D | D | D | D | D | F | F | F |
| **6** | D | D | D | D | D | F | F | SF |
| **7** | SF | D | F | D | F | F | F | F |
| **8** | D | D | D | D | D | F | F | SF |
| **9** | D | D | SF | D | D | F | F | F |
| **10** | F | D | F | F | F | SF | SF | D |
| **11** | D | D | D | D | F | F | F | F |
| **12** | D | D | F | D | F | F | F | F |

D: Deflocculated or dispersed
SF: Slightly flocculated
F: Flocculated
na: not available
1. Titanium dioxide Ti-Pure Rutile R706 (DuPont Co., Wilmington, DE)
2. Raven 5000 carbon black (Columbian Chemicals Co., Atlanta, GA))
3. Irgazin yellow 3RLTN (Ciba Specialty Chemicals, Pigment Div., Newport, DE)
4. Irgazin blue X-3367 (Ciba Specialty Chemicals, Pigment Div., Newport, DE)
5. Hostaperm blue BT-617-D (Clariant Corp., Coventry, RI)
6. Hostaperm blue BT-729-D (Clariant Corp., Coventry, RI)
7. Scarlet RT-390-D (Ciba Specialty Chemicals, Pigment Div., Newport, DE)
8. Magenta RT-355D (Ciba Specialty Chemicals, Pigment Div., Newport, DE)
9. Sunfast green 7 (Sun Chemical Corp., Cincinnati, OH)
10. Sicotrans red L2817 (BASF Corp., Colorant Division, Mount Olive, NJ)
11. Irgazin yellow 5GLT (Ciba Specialty Chemicals, Pigment Div., Newport, DE)
12. Hostaperm brown HFR (Clariant Corp., Coventry, RI)

Based on these test results, Comparative Example 1 and 2 are not effective dispersants. Comparative Example 3 without the specific pigment anchoring groups of this invention is also not an effective dispersant. The dispersants of the linear block copolymers including both diblock and triblock copolymers having the pigment anchoring groups of this invention are segmented from the stabilizig groups showed clear advantages in dispersing and stabilizing the pigment dispersions. Examples 4 and 6 having both the amide functional groups and the acetoxyacetyl/amine groups showed enhanced the pigment interactions, and are the most effective for a wide range of pigment types.

## Claims

1. A pigment dispersant comprising a linear block copolymer, said linear block copolymer comprising:
(a) a linear A-block formed by polymerizing ethylenically unsaturated A-block monomers; and
(b) a linear B-block comprising one or more acetoacetyl amine functional groups as pigment anchoring groups, said linear B-block is formed by polymerizing ethylenically unsaturated B-block monomers;
wherein said linear A-block is essentially free from said acetoacetyl amine functional groups.

2. The pigment dispersant of claim 1, wherein said linear block copolymer further comprises:
(c) a linear C-block formed by polymerizing ethylenically unsaturated C-block monomers;
wherein said linear A-block and said C-block are essentially free from said acetoacetyl amine functional groups, and wherein said A-block monomers and said C-block monomers are the same or different.

3. The pigment dispersant of claim 1 or 2, wherein said B-block monomers comprise an acetoacetate monomer having one or more acetoacetate functional groups, and wherein said acetoacetyl amine functional groups are formed by reacting said acetoacetate functional groups with a primary amine.

4. The pigment dispersant of claim 3, wherein said acetoacetate monomers are selected from acetoacetoxyethyl methacrylate, acetoacetoxyethyl acrylate, acetoacetoxypropyl methacrylate, acetoacetoxypropyl acrylate, allyl acetoacetate, acetoacetoxybutyl methacrylate, acetoacetoxybutyl acrylate, or a combination thereof.

5. The pigment dispersant of claim 3, wherein said primary amine is selected from aliphatic, aromatic, heterocyclic compounds containing primary amine groups, or a combination thereof.

6. The pigment dispersant of claim 3, wherein said primary amine is selected from N-benzylamine, phenethylamine, 4-phenylbutylamine, 2,2-diphenylethylamine, propylamine, butylamine, aminoethanol, 2-amino-1-butanol, N,N-dimethylaminopropylamine, 4-(aminoethyl)morpholine, 2-(2-aminoethyl)-1-methyl pyrrolidine, 1-(2-aminoethyl) pyrrolidine, 2-(2-aminoethyl) pyridine, 1-(2-aminoethyl) piperazine, 1-(2-aminoethyl) piperidine, 1-(3-aminopropyl) imidazole, 4-(3-aminopropyl) morpholine, 1-(3-aminopropyl)-2-pipecoline, 1-(3-aminopropyl)-2-pyrrolidinone, or a combination thereof.

7. The pigment dispersant of claim 1 or 2, wherein said B-block monomers comprise a hydroxyl monomer having one or more hydroxyl functional groups, wherein said acetoacetyl amine functional groups are formed by first reacting said hydroxyl functional groups with an acetoacetate agent to convert said hydroxyl functional groups to acetoacetate functional groups and then reacting said acetoacetate functional groups with a primary amine.

8. The pigment dispersant of claim 7, wherein said hydroxyl monomer is selected from hydroxyl acrylate, hydroxyl methacrylate, or a combination thereof.

9. The pigment dispersant of claim 7, wherein said acetoacetate agent comprises t-butyl acetoacetate.

10. The pigment dispersant of claim 7, wherein said primary amine is selected from aliphatic, aromatic, heterocyclic compounds containing primary amine groups, or a combination thereof.

11. The pigment dispersant of claim 7, wherein said primary amine is selected from N-benzylamine, phenethylamine, 4-phenylbutylamine, 2,2-diphenylethylamine, propylamine, butylamine, aminoethanol, 2-amino-1-butanol, N,N-dimethylaminopropylamine, 4-(aminoethyl)morpholine, 2-(2-aminoethyl)-1-methyl pyrrolidine, 1-(2-aminoethyl) pyrrolidine, 2-(2-aminoethyl) pyridine, 1-(2-aminoethyl) piperazine, 1-(2-aminoethyl) piperidine, 1-(3-aminopropyl) imidazole, 4-(3-aminopropyl) morpholine, 1-(3-aminopropyl)-2-pipecoline, 1-(3-aminopropyl)-2-pyrrolidinone, or a combination thereof.

12. The pigment dispersant of claim 1 or 2, wherein said linear B-block further comprises, as pigment anchoring groups, one or more acyclic amide groups, one or more cyclic amide groups, one or more quaternary ammonium groups, or a combination thereof.

13. The pigment dispersant of claim 1 or 2, wherein said B-block monomers comprise hydroxyl functional monomers.

14. The pigment dispersant of claim 1 or 2, wherein the linear block copolymer has a weight average molecular weight of 2,000-100,000.

15. A pigment dispersion comprising a pigment and the pigment dispersant of claim 1 or 2.

16. A coating composition comprising the pigment dispersion of claim 15.

## Patentansprüche

1. Pigmentdispersionsmittel, umfassend ein lineares Blockcopolymer, das lineare Blockcopolymer umfassend:
(a) einen linearen A-Block, gebildet durch Polymerisieren ethylenisch ungesättigter A-Blockmonomere; und
(b) einen linearen B-Block, umfassend eine oder mehrere acetoacetyl-aminfunktionelle Gruppe(n) als Pigmentankergruppen, wobei der B-Block durch Polymerisieren ethylenisch ungesättigter B-Blockmonomere gebildet ist,
worin der lineare A-Block im Wesentlichen frei von den acetoacetyl-amin-funktionellen Gruppen ist.

2. Pigmentdispersionsmittel gemäß Anspruch 1, worin das lineare Blockcopolymer ferner umfasst:
(c) einen linearen C-Block, gebildet durch Polymerisieren ethylenisch ungesättigter C-Blockmonomere;
worin der lineare A-Block und der C-Block im Wesentlichen frei von den acetoacetyl-amin-funktionellen Gruppen sind, und worin die A-Blockmonomere und die C-Blockmonomere gleich oder verschieden sind.

3. Pigmentdispersionsmittel gemäß Anspruch 1 oder 2, worin die B-Blockmonomere ein Acetoacetatmonomer, das eine oder mehrere acetoacetat-funktionelle Gruppen aufweist, umfasst, und worin die acetoacetyl-amin-funktionellen Gruppen durch Umsetzen der acetoacetat-funktionellen Gruppen mit einem primären Amin gebildet sind.

4. Pigmentdispersionsmittel gemäß Anspruch 3, worin die Acetoacetatmonomere ausgewählt sind aus Acetoacetoxyethylmethacrylat, Acetoacetoxyethylacrylat, Acetoacetoxypropylmethacrylat, Acetoacetoxypropylacrylat, Allylacetoacetat, Acetoacetoxybutylmethacrylat, Acetoacetoxybutylacrylat, oder einer Kombination davon.

5. Pigmentdispersionsmittel gemäß Anspruch 3, worin das primäre Amin ausgewählt ist aus aliphatischen, aromatischen, heterocyclischen Verbindungen, die primäre Amingruppen enthalten, oder einer Kombination davon.

6. Pigmentdispersionsmittel gemäß Anspruch 3, worin das primäre Amin ausgewählt ist aus N-Benzylamin, Phenylethylamin, 4-Phenylbutylamin, 2,2-Diphenylethylamin, Propylamin, Butylamin, Aminoethanol, 2-Amino-1-butanol, N,N-Dimethylaminopropylamin, 4-(Aminoethyl)morpholin, 2-(2-Aminoethyl)-1-methylpyrrolidin, 1-(2-Aminoethyl)pyrrolidin, 2-(2-Aminoethyl)pyridin, 1-(2-Aminoethyl)piperazin, 1-(2-Aminoethyl)piperidin, 1-(3-Aminopropyl)imidazol, 4-(3-Aminopropyl)morpholin, 1-(3-Aminopropyl)-2-pipecolin, 1-(3-Aminopropyl)-2-pyrrolidinon, oder einer Mischung davon.

7. Pigmentdispersionsmittel gemäß Anspruch 1 oder 2, worin die B-Blockmonomere ein Hydroxylmonomer, das eine oder mehrere hydroxyl-funktionellen Gruppen aufweist, umfasst, worin die acetoacetyl-amin-funktionellen Gruppen durch zuerst Umsetzen der hydroxyl-funktionellen Gruppen mit einem Acetoacetylmittel, um die hydroxyl-funktionellen Gruppen zu acetoacetat-funktionellen Gruppen umzuwandeln, und dann Umsetzen der acetoacetat-funktionellen Gruppen mit einem primären Amin gebildet sind.

8. Pigmentdispersionsmittel gemäß Anspruch 7, worin das Hydroxylmonomer ausgewählt ist aus Hydroxylacrylat, Hydroxylmethacrylat, oder einer Kombination davon.

9. Pigmentdispersionsmittel gemäß Anspruch 7, worin das Acetoacetatmittel t-Butylacetoacetat umfasst.

10. Pigmentdispersionsmittel gemäß Anspruch 7, worin das primäre Amin ausgewählt ist aus aliphatischen, aromatischen, heterocyclischen Verbindungen, die primäre Amingruppen enthalten, oder einer Kombination davon.

11. Pigmentdispersionsmittel gemäß Anspruch 7, worin das primäre Amin ausgewählt ist aus N-Benzylamin, Phenylethylamin, 4-Phenylbutylamin, 2,2-Diphenylethylamin, Propylamin, Butylamin, Aminoethanol, 2-Amino-1-butanol, N,N-Dimethylaminopropylamin, 4-(Aminoethyl)morpholin, 2-(2-Aminoethyl)-1-methylpyrrolidin, 1-(2-Aminoethyl)pyrrolidin, 2-(2-Aminoethyl)pyridin, 1-(2-Aminoethyl)piperazin, 1-(2-Aminoethyl)piperidin, 1-(3-Aminopropyl)imidazol, 4-(3-Aminopropyl)morpholin, 1-(3-Aminopropyl)-2-pipecolin, 1-(3-Aminopropyl)-2-pyrrolidinon, oder einer Mischung davon.

12. Pigmentdispersionsmittel gemäß Anspruch 1 oder 2, worin der lineare B-Block ferner eine oder mehrere Acrylamidgruppe(n), eine oder mehrere nicht-zyklische Amidgruppe(n), eine oder mehrere zyklische Amidgruppe(n), eine oder mehrere quartäre Ammoniumgruppen, oder eine Kombination davon als Pigmentankergruppen umfasst.

13. Pigmentdispersionsmittel gemäß Anspruch 1 oder 2, worin die B-Blockmonomere hydroxyl-funktionelle Monomere umfassen.

14. Pigmentdispersionsmittel gemäß Anspruch 1 oder 2, worin das lineare Blockcopolymer ein Gewichtsmittel des Molekulargewichts von 2000-100000 aufweist.

15. Pigmentdispersion, umfassend ein Pigment und das Pigmentdispersionsmittel gemäß Anspruch 1 oder 2.

16. Beschichtungszusammensetzung, umfassend die Pigmentdispersion gemäß Anspruch 15.

## Revendications

1. Agent dispersant de pigment comprenant un copolymère séquencé linéaire, ledit copolymère séquencé linéaire comprenant :
(a) un bloc A linéaire formé par la polymérisation de monomères à blocs A éthylèniquement insaturés ; et
(b) un bloc B linéaire comprenant un ou plusieurs groupes fonctionnels acétoacétyl amine en tant que groupe d'ancrage de pigment, ledit bloc B linéaire est formé par la polymérisation de monomères à blocs B éthylèniquement insaturés ;
dans lequel ledit bloc A linéaire est sensiblement exempt desdits groupes fonctionnels acétoacétyl amine.

2. Agent dispersant de pigment selon la revendication 1, dans lequel ledit copolymère séquencé linéaire comprend en outre :
(c) un bloc C linéaire formé par la polymérisation de monomères à blocs C éthylèniquement insaturés ;
dans lequel ledit bloc A linéaire et ledit bloc C sont sensiblement exempts desdits groupes fonctionnels acétoacétyl amine, et dans lequel lesdits monomères à blocs A et lesdits monomères à blocs C sont les mêmes ou sont différents.

3. Agent dispersant de pigment selon la revendication 1 ou la revendication 2, dans lequel lesdits monomères à blocs B comprennent un monomère acétoacétate ayant un ou plusieurs groupes fonctionnels acétoacétate, et dans lequel lesdits groupes fonctionnels acétoacétyl amine sont formés à l'aide de la mise en réaction desdits groupes fonctionnels acétoacétate avec une amine primaire.

4. Agent dispersant de pigment selon la revendication 3, dans lequel lesdits monomères d'acétoacétate sont choisis parmi le méthacrylate d'acétoacétoxyéthyle, l'acrylate d'acétoacétoxyéthyle, le méthacrylate d'acétoacétoxypropyle, l'acrylate d'acétoacétoxypropyle, l'acétoacétate d'allyle, le méthacrylate d'acétoacétoxbutyle, l'acrylate d'acétoacétoxbutyle ou une combinaison de ces derniers.

5. Agent dispersant de pigment selon la revendication 3, dans lequel ladite amine primaire est choisie parmi les composés aliphatiques, aromatiques, et hétérocycliques contenant des groupes amine primaire ou une combinaison de ces derniers.

6. Agent dispersant de pigment selon la revendication 3, dans lequel ladite amine primaire est choisie parmi la N-benzylamine, la phénéthylamine, la 4-phénylbutylamine, la 2,2-diphényléthylamine, la propylamine, la butylamine, l'aminoéthanol, le 2-amino-1-butanol, la N,N-diméthylaminopropylamine, la 4-(aminoéthyl)morpholine, la 2-(2-aminoéthyl)-1-méthylpyrrolidine, la 1-(2-aminoéthyl) pyrrolidine, la 2-(2-aminoéthyl) pyridine, la 1-(2-aminoéthyl) pipérazine, la 1-(2-aminoéthyl) pipéridine, le 1-(3-aminopropyl) imidazole, la 4-(3-aminopropyl) morpholine, la 1-(3-aminopropyl)-2-pipécoline, la 1-(3-aminopropyl)-2-pyrrolidinone ou une combinaison de ces derniers.

7. Agent dispersant de pigment selon la revendication 1 ou la revendication 2, dans lequel les monomères à blocs B comprennent un monomère hydroxyle ayant un ou plusieurs groupes fonctionnels hydroxyle, dans lequel lesdits groupes fonctionnels acétoacétyl amine sont formés premièrement à l'aide de la mise en réactions desdits groupes fonctionnels hydroxyle avec un agent d'acétoacétate pour convertir lesdits groupes fonctionnels hydroxyle en des groupes fonctionnels acétoacétate et ensuite à l'aide de la mise en réaction desdits groupes fonctionnels acétoacétate avec une amine primaire.

8. Agent dispersant de pigment selon la revendication 7, dans lequel ledit monomère hydroxyle est choisi parmi l'acrylate d'hydroxyle, le méthacrylate d'hydroxyle ou une combinaison de ces derniers.

9. Agent dispersant de pigment selon la revendication 7, dans lequel l'agent d'acétoacétate comprend de l'acétoacétate de t-butyle.

10. Agent dispersant de pigment selon la revendication 7, dans lequel ladite amine primaire est choisie parmi les composés aliphatiques, aromatiques, et hétérocycliques contenant des groupes amine primaire ou une combinaison de ces derniers.

11. Agent dispersant de pigment selon la revendication 7, dans lequel ladite amine primaire est choisie parmi la N-benzylamine, la phénéthylamine, la 4-phénylbutylamine, la 2,2-diphényléthylamine, la propylamine, la butylamine, l'aminoéthanol, le 2-amino-1-butanol, la N,N-diméthylaminopropylamine, la 4-(aminoéthyl)morpholine, la 2-(2-aminoéthyl)-1-méthylpyrrolidine, la 1-(2-aminoéthyl) pyrrolidine, la 2-(2-aminoéthyl) pyridine, la 1-(2-aminoéthyl) pipérazine, la 1-(2-aminoéthyl) pipéridine, le 1-(3-aminopropyl) imidazole, la 4-(3-aminopropyl) morpholine, la 1-(3-aminopropyl)-2-pipécoline, la 1-(3-aminopropyl)-2-pyrrolidinone ou une combinaison de ces derniers.

12. Agent dispersant de pigment selon la revendication 1 ou la revendication 2, dans lequel ledit bloc B linéaire comprend en outre, en tant que groupe d'ancrage de pigment, un ou plusieurs groupes amide acyclique, un ou plusieurs groupes amide cyclique, un ou plusieurs groupes ammonium quaternaire ou une combinaison de ces derniers.

13. Agent dispersant de pigment selon la revendication 1 ou la revendication 2, dans lequel lesdits monomères à blocs B comprennent des monomères fonctionnels à hydroxyle.

14. Agent dispersant de pigment selon la revendication 1 ou la revendication 2, dans lequel le copolymère séquencé linéaire à un poids moléculaire moyen en poids compris entre 2000 et 100 000.

15. Dispersion de pigment comprenant un pigment et l'agent dispersant de pigment selon la revendication 1 ou la revendication 2.

16. Composition de revêtement comprenant la dispersion de pigment selon la revendication 15.
